(19) Europäisches Patentamt
European Patent Office
Office européen des brevets

(11) Publication number: **0 069 159**
**A1**

# (12) EUROPEAN PATENT APPLICATION

(21) Application number: 81105177.0

(22) Date of filing: 03.07.81

(51) Int. Cl.³: C 10 B 53/00
C 10 B 1/04

(43) Date of publication of application:
12.01.83 Bulletin 83/2

(84) Designated Contracting States:
BE DE FR IT

(71) Applicant: Ostan, Raffaele, Dr.
Viale Prealpi, 44
I-21047 Saronno(IT)

(72) Inventor: Ostan, Raffaele, Dr.
V. Le Prealpi 44
I-21047 Saronno VA(IT)

(72) Inventor: Chiesa, Franco, Dr.
Via Roma 25
Cozzo PV(IT)

(72) Inventor: Zanaboni, Domenico, Ing.
Piazza Napoli 9
Milano(IT)

## (54) Pyrolysis process of wood or more generically of substances containing organic carbonium.

(57) A process and apparatus for the pyrolysis of substances with an indicative chemical composition of $C_xH_yO_z$ in which

x equals 0,20 - 0,45
y equals 0,75 - 0,25
z equals 0,05 - 0,30

made at temperatures between 250 and 500°C, not delimitative.

The operative sequence leads to a high pyrolysis efficiency (80%), with a production of charcoal, mixed organic liquids and combustible gas.

The process uses diabetic reactors with one or more stages into which the product to be pyrolysed is introduced by easily manageable cartridges.

EP 0 069 159 A1

## G E N E R A L I T I E S

The invention refers to a pyrolysis process of wood and/or more generically of substances containing carbonium.

From an other side the invention refers to a reactor and/or more rectors as technological components of a plant, still subject of the invention, in wich the pyrolysis process is made of the said substances.

The PYROLYSIS, as it is known, is defined as the process of the thermal decomposition of the organic molecules, done is absence of oxygen.

When wood is considered, or other substances containing organic carbonium, the PYROLYSIS lead to the formation of:

- 1) Charcoal .
- 2) Mixed gas
- 3) Mixed liquids

The quality and the composition of the PYROLYSIS products depend upon the quality of the raw materials, called "Primary combustible",

- upon the temperature and the pressure of the reaction
- upon the residence time of the products into the reactor (and/or reactors)

As primary combustibles are considered:

A) Wood, with the most extensive botanical classification.

B) Wood scraps, in combination also with other substances as rubber glues, plastic, a.s.o.....

C) Substances, whose composition approximately is similar to that of the wood as:

1) Straw of wheat, rice, barley, oat, or generically of cereals.

2) Reed of sugar, maize, sorghum...

D) Urban disposable scraps, plastic residues, rubber rests a.s.o....

E) More generically all the substances, whose molecular chemical composition could be indicativaly described by the formula:

$$- C_x H_y O_z -$$

| | | | |
|---|---|---|---|
| where: x | equals | | 0,20 - 0,45 |
| y | " | | 0,75 - 0,25 |
| z | " | | 0,05 - 0,30 |

The limits of the composition may be also wider, with reference to a special inorganic additives in the substances, and/or with reference to an economic convenience of applying the PYROLYSIS process to substances containing less than 0,2 molar of carbonium or more than 0,3 molar of oxygen.

It is known that during the pyrolytic reaction of the said substances, several products are formed - with different ratios (according to the quality of the primary combustible and to the reaction conditions) - :
solids, liquids, gas, containing one, two or three of the elements indicated.

by the basic molecular formula.

Examples of such products are:

- C , $H_2$, $O_2$, $H_2O$, CO, $CO_2$, $CH_4$, HCOOH,

$CH_3COOH$, $CH_3OH$, $CH_3CH_2OH$, $CH_3COCH_3$, $CH_3COOCH_3$

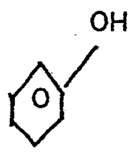

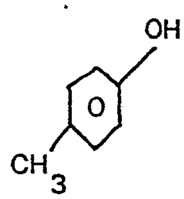

liquid and/or gaseous hydrocarbons, tars, pitches, etc...

These products, according to their phisical status, could be mixed, or could be together with impurities, containing elements, different from the three considered in the basic formula.

Examples of impurities may be:

- S, P, $Cl_2$, Fe, Na, etc...

To confirm the invention, in order to applicate it industrially, the pyrolysis data have been controlled in laboratory, to compare them with the data already known by the literature.

On the tables N°1⟶N°5 the results are summarized, as obtained and more precisely:

The Table N°1 reports:

A) The wood thermogravimetric analysis as the residual charcoal against the PYROLYSIS temperature.

B) The wood thermodifferential analysis, as the enthalpy, algebrically given by the PYROLYSIS reaction, against the temperature.

C) The chemical products, obtainable by the PYROLYSIS reaction, against the temperature.

The Table N°2 reports:

A) The charcoal and liquid and/or volatile products yield against the PYROLYSIS temperature.

B) The fixed carbonium and volatiles content on the charcoal against the production temperature.

The Table N°3 reports

A) The temperature relief schema, in an experimental oven.

B) The temperature theoretical behaviour during the time, respectively as: plot 1 = the wood external temperature, plot 2 = the wood internal temperature
A during a reaction theoretically normal
B during an exothermic reaction.

C) The actual experimental technological cycle, reporting the temperatures as defined at the point B.

D) The laboratory PYROLYSIS experimental plant

The Table N°4 reports.

The energy balance for the wood "PYROLYSIS".

The Table N°5 reports.

The pyrolytic liquid fractionation.

Within the experimental development to elaborate the Tables N°1 ⟶ N°5, a qualiquantitative evaluation has been possible, for the pyrolysis products, wich is indicatively reported on the following "APPENDIX to the Tables N°1 ⟶ N°5".

APPENDIX to the tables N°1 ⟶ N°5

The qualiquantitative analytical results over the components obtained during the wood PYROLYSIS, referred to the dry wood at 100% and 320°C, are indicatively:

100 Kg. of 100% dry wood, at 320°C give:

| | | Kg. | % |
|---|---|---|---|
| charcoal + mineral ashes + volatiles (Fixed carbonium content 70%) | : | 40 | 40 |
| pyrolytic liquid composed by: | | 45 | 45 |

| | Kg. |
|---|---|
| - Water | 28,60 |
| - Acetic acid | 3,90 |
| - Acetone + Formic Acid | 1,90 |
| - Methanol | 2,50 |
| - Methylacetate | 0,55 |
| - Methylethylketone | 0,05 |
| - Phenol + Cresol | 0,79 |
| - Guajcol | 0,45 |

| OTHER products | Kg. | Kg. | % |
| --- | --- | --- | --- |
| tars, heavy oils, hydrocarbons with more than 30 C etc... | 6,8 | | |
| PYROLYTIC gas composed by: | | 15 | 15 |
| Carbonium monoxide (CO) | 4,8 | | |
| Carbonium dioxide ($CO_2$) | 7,8 | | |
| Hydrocarbons ($C_1$ — $C_4$) | 1,8 | | |
| Hydrogen ($H_2$) | 0,26 | | |
| Oxygen ($O_2$) | 0,35 | | |
| | TOTAL | 100 | 100 |

The heating values indicativaly are the following:

| | Superior Kcal/Kg. | Inferior Kcal/Kg. |
| --- | --- | --- |
| - Dry wood | 4800 | 4500 |
| - Charcoal | 7000 | 6500 |
| - Pyrolytic Liquid | 2850 | 2700 |
| - Pyrolytic Gas | 1700 | 1600 |

2) THE TECHNOLOGICAL CYCLE

The subject of the invention is a technological cycle to be applied to an industrial plant, which should accomplish, globally and continuously the following phases:

- the primary combustible loading
- " " " " " preheating
- " " " " " drying
- " " " " " pyrolysis
- the pyrolytic charcoal cooling
- " " " " unloading
- the pyrolytic condensable and incondensable products withdrawal
- the condensable products condensation
- their fractionation to end products
- the incondesable products recycling
- their utilization during the thermal exchange phase, by their recycling at a controlled rate
- their utilization, as a contribution to " The secondary combustible".

NOTE: The secondary combustible is defined as " The combustible to be introduced in an oven to heat the primary combustible contained by the reactor" to increase the temperature according to the various phases of preheating, drying, pyrolysis. As "Secondary combustibles" are considered:
- wood,charcoal coal, combustible gas, combustible oil, gas recycled from the PYROLYSIS.

Such a technological cycle, for a 6 reactors plant, is indicatively illustrated by the Table N°6.

This cycle differs from the one applied to the already operating industrial plants because of its utilization of multiple diabatic reactors, which do accomplish together the above technological cycle, but one by one, out of the system, are available to the phase of unloading the pyrolytic charcoal and to that of loading the primary combustible.
(Subsequent parallel pyrolysis).
The number of reactors may vary - two,

four, six, eight etc..., according to the capacity of the plant one wants, according to the different utilization of the various thermal levels of the total cycle, and according to the continuity applied to the pyrolytic condensable and incondensable products withdrawal.

In the Table N°7 one among the many possibilities is reported for the operative cycles composition, where the above phases are made continuous.

(Tables 7a - 7b).

The evident advantages by the utilization of multiple diabatic reactors, in comparison with an adiabatic continuous reactor are:

- The easy handling of the primary combustible, with a volumic size, higher by a ratio 10 to 1 in comparison to that for the single adiabatic continuous reactor.
- The reduction of the preparation cost for the primary combustible, as the above point.

- The cost reduction for maintenance, and for primary combustible and pyrolytic charcoal transportation.
- The elimination of the primary combustible chopping necessity.
- The elimination of the reactor clogging possibility, because of it peculiar form, that will be described as a substantial aspect of this invention.
- The optimal exploitation, by the diabatic reactors of the available heat, with an efficiency, very high, globally more than 80%.
- The semplified recovery of the pyrolytic fluids.

To improve the exploitation of the cycle, the tecnique of the supplementary recycling at a high rate and high velocity of the combustion fumes, is used together with a good control of the oxygen content.
This will help the homogeneization of the process in each point of the primary combustible and pyrolytic charcoal.

3) THE MONOSTAGE PYROLYSIS REACTOR (DIABATIC) FOR THE SUBSEQUENT PARALLEL PYROLYSIS.

In the table N°8 the pyrolytic reactor concerning the invention is sketched, as applicable to a process already discussed at the point N°2, and indicated in the table N°6.

The reactor substantially shows the following parts:

1) The reactor body
2) The movable cartridge to hold the primary combustible and/or the pyrolytic charcoal, made by bored sheet iron (40% of the surface = = holes)
3) The suitable jacket for the heat transfer and transportation
4) The thermal insulation for high temperatures (up to 1200°C)
5) The opening for the introduction and/or the extraction of the cartridge
6) The thermal carrier deviating devices; the

thermal carrier are the high temperature combustion fumes.

7) The flanged pipe connections
   a) for the thermal carrier inlet to the jacket, and its recycle.
   b) for the thermal carrier outlet from the jacket
   c) for the inlet of a part of the thermal carrier to the reactor and its recycle.
   d) for the outlet from the reactor of the termal carrier containing the pyrolytic fluids of the cartridge.
8) The temperature measure points
9) The pressure measure points
10) The safety device
11) The basis, combined to the reactor by bolts or other systems.

The components must be thermostress resistant, and in fact the reactor is made in order that all the elements are independent each other, to resist to the temperature effects.

The life of the reactor, by this way, is longer, because the thermal dilatations are independent.
The thermal expansions are higher particularly on the body and jacket of the reactor, wich are exposed within 8-12 hours to thermal escursions up to 650° C.
Other kinds of stresses must be considered

1) Thermomechanique stress (due to the reactor weight)
2) Thermochimique stress (due to the presence of pyrolytic acids at very hight temperature).

During a cycle, so thermically complex, composite materials are not usable, but it is necessary the use of chemioresistant materials and special stainless steels.
The thickness is important to reduce the significative deformations, generated by the said temperature escursions.

The geometric construction of the reactor must take into account the capacity of the plant and necessary proportions according to the thermodynamic needs of the system.

With reference to the "APPENDIX TO THE TABLES N°1 —> 5", and to the balance of materials, the necessary heat, to accomplish the thermal cycle, on a quantity of 1000 Kg. of wet wood (15% of water), is calculated:

a) Balance of materials

| | | | |
|---|---|---|---|
| - Wet wood | Kg. | 1000 | |
| - Water (15% on the total) | Kg. | 150 | 1000 |
| - Dry wood | Kg. | 850 | |
| | | ========== | |
| - Charcoal (40% on dry wood) | Kg. | 340 | |
| - Pyrolytic liquid (45% on dry wood) | Kg. | 382,5 | 850 |
| - Pyrolytic gas (15% on dry wood) | Kg. | 127,5 | |
| | | =========== | |

b) Heat balance

- Latent heat

$H_2O$ latent heat Kcal/Kg. 590

Pyrolytic liquid latent heat Kcal/Kg. 300

b.1) water Kg.150

150 Kg. 590 Kcal/kg = 88.500 Kcal

b.2) pyrolytic liquid Kg.382,5

382,5 Kg·300 Kcal/kg. 114.750 Kcal

Total 203.250 Kcal

- Sensible heat

Kg. 1000) $\Delta$T (170°C-25°C) = 145° C

Specific heat 0,3 Kcal/kg ° C

Kg. 850) $\Delta$T (320°C-170°C) = 150°C

Specific heat 0,3 Kcal/Kg ° C

Then:

b.3) 1000 Kg.·145° C · 0,3 Kcal/Kg °C = 43.500 Kcal

b.4) 850 Kg.·150° C · 0,3 Kcal/Kg.°C = 38.250 Kcal

Total 81.750 Kcal

0069159

- Total necessary heat

( excluding the sensible heat to warm up the plant)

| | | |
|---|---|---|
| Latent heat | | 203.250 Kcal |
| sensible heat | | 81.750 Kcal |
| | Total | 285.000 Kcal |

With reference to the table N°3, point C, it is possible to define the heat to be given during the PYROLYSIS phase, wich is corresponding to the addition of the points b.2 and b.4,

. 114.750 Kcal

. 38.250 Kcal

153.000 Kcal

As "heat carrier" are used the combustion fumes of a secondary combustible: they operate with an excursion temperature of (700°C - 150°C) = 550°C, and specific heat of 0,27 Kcal/Kg. °C, with an efficiency of heat exchange to the products up to 90%

Inevery section they are recycled at a high rate and velocity, to improve the heat exchange coefficient and the thermodynamic homogeneization mechanism.

To exchange the total necessary heat for the cycle of the table N°3, applied to 1000 Kg. of 15% water wet wood (as a primary combustible) the following quantity of fumes (as defined before) is involved:

$$\frac{285.000 \text{ Kcal}}{0,9 \cdot 0,27 \text{ Kcal/Kg °C} \cdot 550\text{°C}} = 2132 \approx 2150 \text{ Kg.}$$

The cycle of the table N°3, to warm up the products, requires four (4) hours, as it would require:

$$\frac{285.000 \text{ Kcal}}{4 \text{ h}} = 71250 \text{ Kcal/h}$$

The heat exchange is considered diabatic, through the jacket, with the following conditions:

- jacket $K = 6,2 \sqrt{v} - 4$ where being
  $v$ = velocity of the fumes = 40 m/sec
  $K = 35$ Kcal/m$^2$.°C.h

- Fumes $\Delta T$ (750°C-150°C) = 550°C
- Wood $\Delta T$ (320°C- 25°C) = 295°C

Approximate final $\Delta T$ = 255°C

From the equation:

$$Q = K \cdot S \cdot \Delta T$$

$$S = \frac{Q}{K \cdot \Delta T} = \frac{71250 \text{ Kcal/h}}{35 \text{ Kcal/m}^2 \cdot {}^{o}C \cdot h \cdot 255^{o}C} \cong 8 \text{ m}^2$$

This means that a unit of 1000 Kg. of a primary combustible, as defined, for a cycle like the one of the table N°3, requires a reactor with an exchange surface of 8 $m^2$, everything else supposed as before. The reactor volume for 1000 Kg., is 1,7 $m^3$ (supposing a wood bulk density of 0,6).

For a cylindrical reactor, the termodynamic dimensions, are calculated by combination of:

$$V = h \cdot \frac{\emptyset^2 \cdot \pi}{4} \qquad S_1 = h \cdot \emptyset \cdot \pi$$

where

$S_1$ = lateral surface of the reactor $m^2$

V = volume of the reactor $m^3$

h = height of the reactor m

Ø = diameter of the reactor m

By dividing the two equations one obtains:

$$\frac{V}{S1} = \frac{\emptyset}{4}$$

$$\emptyset = 4 \cdot \frac{V}{S1}$$

$$h = \frac{S_1}{\emptyset \cdot \pi} = \frac{4 \quad V}{\emptyset^2 \cdot \pi}$$

The reactor, applied to 1000 Kg of 15% water wet wood, if cylindrical has the following dimensions:

| | | | |
|---|---|---|---|
| V | = | 1,7 | $m^3$ |
| $S_1$ | = | 8,0 | $m^2$ |
| h | = | 3,0 | m |
| Ø | = | 0,85 | m |

Once "h" has been defined, it is clear that the ratio $\frac{V}{S_1}$ will increase with Ø, according to the proportional dependecy of V and $S_1$ from Ø (or from L in the case of not circular geometry).

| R Nº | Reactor with circular basis Ø | | | | | Reactor with rectangular basis L/4 | | | | |
|---|---|---|---|---|---|---|---|---|---|---|
| | V $m^3$ | Sl $m^2$ | h m | Ø m | CAP. Kg. | V $m^3$ | Sl $m^2$ | h m | L/4 m | CAP Kg. |
| 1 | 1,7 | 8 | 3 | 0,85 | 1000 | 2,17 | 10,2 | 3 | 0,85 | 1300 |
| 2 | 3,4 | 11,3 | 3 | 1,2 | 2000 | 4,32 | 14,4 | 3 | 1,2 | 2590 |
| 2/1 | 2 | 1,41 | 1 | 1,41 | 2 | 1,99 | 1,41 | 1 | 1,41 | 1,99 |

Because the ratio $\frac{V}{Sl}$ is more convenient in the not cylindrical geometric constructions, it is claimed here the use also of not cylindrical reactors. Moreover, due to the necessity of a fixed ratio $\frac{V}{Sl}$, it is claimed here the use of waved exchanging surface, to increase Sl, with V remaining constant.

Wew projection as linear

12 units: total length = 12

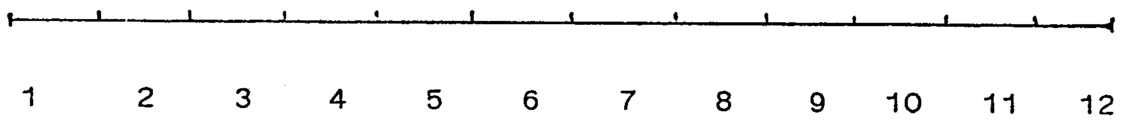


Waved surface projection (4 waves 1,2 for unit)

12 x 4 x 1,2 = 57,6

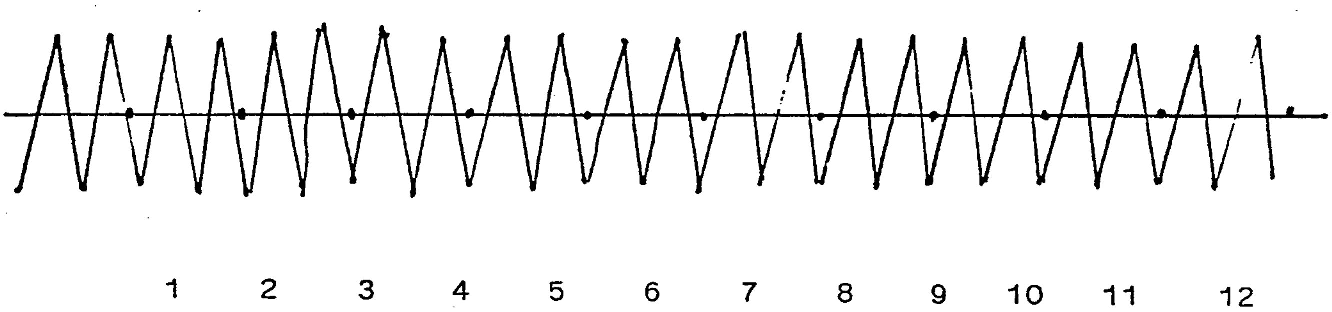


The real length is 4,8 times the projection axis.

## 4) EXAMPLES

Examples N°1

One reactor, similar to that of the table N°8, is charged with 2 cartridges, containing (each) 575 Kg of locust-tree chops with the following dimensions:

Ø 10 cm. max

h 30 cm. max

The total wood weight is 1150 Kg. and its moisture content is 12% of water. The reactor can be controlled with respect to the rates and temperatures, which are regulated to give data like those of the table N°9 corresponding to the pyrolysis test of this example N°1. As it can be shown in the table N°9 and its diagrams, the primary combustible pyrolysis starts before 3 hours, under 200°C (see graph, next page)

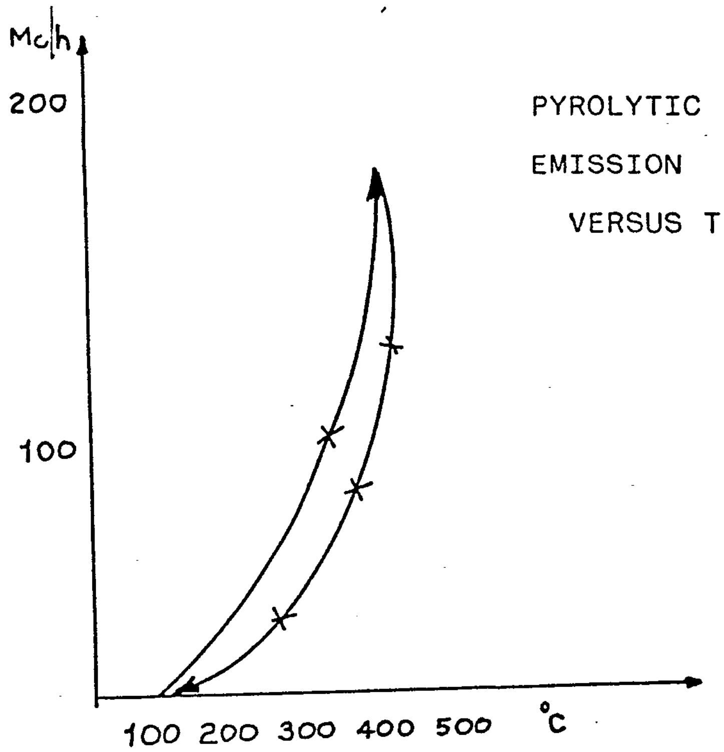


PYROLYTIC PRODUCT
EMISSION (MC/h)
VERSUS TEMPERATURE °C

The material balance indicatively is:

| | | |
|---|---|---|
| Initial moisture (12%) | Kg.132 | * (as caculated) |
| Residual charcoal | Kg.370 | |
| Pyrolysis emissions | Kg.600 | |
| TOTAL | Kg.1102 | |
| CHARGED WOOD | Kg.1150 | |
| Lost PRODUCT | Kg. 48 | |

By the analytical results over the samples taken at the hours 2, 3, 4, 5, 6, 7, 9, the ratio pyrolytic liquid/ pyrolytic gas is near to 3.

The final composition then becomes:

| | | |
|---|---|---|
| Initial moisture | Kg. | 132 |
| Residual charcoal | Kg. | 370 |
| Pyrolytic liquid | Kg. | 450 |
| Pyrolytic gas | Kg. | 150 |
| Total | Kg. | 1102 |

The samplings and analysis, corresponding to the said hours, and registered as:

$x_1$, $x_2$, $x_3$, $x_4$, $x_5$, $x_6$, $x_7$, $x_8$. $x_9$

have been made in the following way.

The samples have been taken from the delivery of the fumes fan, by filling 2 liter glass flasks with the stream of the fumes, suitably cooled down to 150°C.

The volume reduction, consequent to the flasks cooling and to the pyrolytic liquid condensation, is compensated with the introduction of same mercury, to keep the internal pressure of the flasks at a constant and normal value.

The liquid is collected, measured by a graduated cylinder and then analized by chromatography; the pyrolytic gas is also analyzed chromatographically. The quantities are referred to the material balance of the system: corrections are made for the gas, by comparing the analytical results and those obtained on samples contemporaneously taken from the fumes living the chimney.

Examples N°2

This example shows the same operativity of the Example N°1, with the only one variation of the condensation, by an air condenser, of the pyrolytic liquid and tars.

| | | |
|---|---|---|
| Charged wood | Kg. 1100 | |
| Moisture 15% | Kg. 165 | |
| Pyrolysis temperature | 300 - 350°C | |
| Total cycle time | hours 9 | |
| Residual charcoal | Kg. 380 | |
| Pyrolytic liquid | Kg. 450 | 935 |
| Pyrolytic gas | Kg. 105 | |

In the table N°10 are registered all the values concerning this test.

The qualiquantitative analysis of the products obtained during the test of the examples are not far from the values reported on the "Appendix to the tables N°1→ 5.

CLAIMS

1) Pyrolysis process of primary combustibles as:

A) Forest wood, or more generically wood as botanically extensively defined.

B) Wood scraps, coming from wood conventional manufacturings: the wood might be combined also with other materials as glues, rubbers, varnishes, etc...

C) Substances, whose composition is similar to wood, as:

-1- Straw of weath, rice, barley, oat , or generally cereals.

-2- Sugar reed, maize reed, etc...

D) Urban scraps, plastic residue, rubber residues etc...

E) More generically all the substances whose molecular chemical composition can be indicatively described by the formula:

$$C_xH_yO_z$$

where $x = 0,20 \div 0,45$

$y = 0,75 \div 0,25$

$z = 0,05 \div 0,30$

but with wider limits as already said in the generalities. The process is characterized by a technological cycle, that accomplishes continuously the phases of:

- the prymary combustible loading
- its preheating
- its drying
- its pyrolysis
- the charcoal cooling by the pyrolytic gas
- its water cooling
- its unloading
- the pyrolytic products (condensables and incondensable) withdrawal
- the condensables condensation
- their fractionation to the end products
- the incondesables recycling
- their use during the thermal exchange and the pyrolytic charcoal cooling

- their use in the secondary combustible oven .

The above phases may be industrially performed on multiple diabatic reactors which do operate together, as a continuous plant, but out of the cycle each one reactor is unloaded with the charcoal, or loaded with the primary combustible, as defined before.

The reactors number may vary - two, four, six eight etcc. - according to the capacity one wants,its economy, according to the thermal levels utilization of the total cycle, ad according to the continuity of the withdrawal of the pyrolytic fluids (consensable and incondensables).

The plant is compact, and it can be built on fixed areas, or over movable units, to be transferred from one place to an other, (by land or by water ways).

The total technological cycle of the plant is reported on the table N°6.

2) A process, as described, wich accomplishes the cycle phases in the following operative but not limitative conditions:

a) The preheating of the primary combustible by direct contact with the combustion fumes of a secondary combustible (The recycling of the pyrolytic incondesable products is included) at a temperature between 100 and 250°C.

b) The drying of the primary combustible by direct contact with the fumes, (point A) at a temperature betwwen 150 and 450°C,

c) The PYROLISIS of the primary combustible by diabatic heating (Jacket exchange) with the above fumes, and the heating with a small stream of this fumes by contact, at a temperature between 300 and 700° C.

d) The withdrawal of the pyrolytic fluids at a temperatu re between 170 and 500°C their cooling and separation (To have the condensables and incondesables) at the room temperature, less than 40° C.

e) The pyrolysis incondensable recycling, to cool the pyrolytic charcoal at a decreasing temperature of the

charcoal from 500 to 170°C, and at an increasing temperature of the gas from 40 to 200°C.

F) The introduction of these incondensables products to the combustion oven.

G) The cooling water introduction to cool the charcoal down to 50°C.

3) As an alternative to the preceding process, which uses multiple diabatic monostage reactors, it is claimed the utilization of a plant with one or more diabatic multistages reactors (SERIES PYROLYSIS). The difference between a monostage and a multistages reactor, is that in the first type the cartridge (containing the primary combustible) is steady during all the phases, and the fluids are deviated, whilst in the second type the cartridge is transferred from the loading zone to the preheating , drying prepyrolysis, pyrolysis, gas cooling, water cooling unloading ones, according to scheduled times on the basis of the experimental real technological cycle. In this second type the process fluids go through fixed and defined ways. The indicative flow-sheet of this process is reported in the table N°11.

All the operations are controlled by a program, previously calculated, to give a continuous and automatic process; in the first case one reactor is regulated to pass to the next phase by the fluids deviation (Subsequent parallel pyrolysis) in the second case the cartridges are related to pass from a certain phase zone to the next one (Series pyrolysis): the out of phase combination of several lines is also possible to reach the optimal continuity of the production.

4) A pyrolysis reactor, with a geometric not binding form, but comprising the following fundamental parts:
a) The reactor body: making the exchange surface necessary to the diabatic mechanism during the various phases of pyrolysis, drying and preheating of the primary combustible.
The reactor body is constructed with a high temperature resistent sheet (ex. aisi 310), with a geometric shape to guarantee an exchange surface of at least 10 $m^2$ for every unit of 1000 Kg. of the primary combustible to pyrolyze.

To this purpose the use is claimed of waved exchange surfaces, whose ratio between the effective surface and the new projection is greater than 1 . The shape of the wave is not binding (round, triangular, trapezoidal, square, rectangular), and it is not limiting the invention purposes.

B) The movable cartridge, to contain and transport the primary combustible and/or the pyrolytic charcoal, made with bored iron sheet, in not limitative manner, for the direct contact between the fumes and primary combustible.
Into one reactor more than one cartridges may be introduced, according to the required reactor capacity, and according to the convenience of moving the cartridge.

C) The suitable jacket for the reactor, where through the combustion fumes pass to heat the system.

D) The thermal insulation for high temperatures up to 1200°C.

E) The opening or door for the introduction of the cartridges.

F) The deviation sheets of the thermal carrier, that is the combustion fumes coming from a combustion oven external or incorporated to the reactor.

G) The flanged pipe connections.

- for the heat carrier inlet to the jacket, and its recycle.
- for the heat carrier outlet from the jacket
- for the inlet of a stream of the heat carrier to the cartridge, and its recycle.
- for the outlet from the cartridge of the heat carrier containing the pyrolytic fluids.

H) The temperature measure points.

I) The pressure measure points.

L) The safety device.

H) The reactor basis.

The reactor indicative drawing is reported in the Table N°8, and is not limitative.

5) A multistages reactor comprising:

- The loading zone of the cartridge, containing the primary combustible
- The combustible preheating zone
- The combustible drying zone
- The combustible prepyrolysis zone
- The combustible pyrolysis zone
- The charcoal gas cooling zone
- The charcoal water cooling zone
- The charcoal unloading zone
- The cartridges movement devices
- The thermal exchang. jackets
- The interzone separation slide valves
- The pipe connections for the suitable process circuits for the fluids and their recycles
- The thermal insulation
- The temperature, pressure, rate, measure points
- etc...

The multistages reactor indicative drawing is reported in the table N°12.

The constructive geometry of the reactor is not limitative.

6) It is claimed, for the both reactors, the use of the gaseous fluids recycles, as many times said, to increase, by the recycle high rate, the thermal exchange coefficient, and sensibly reduce the operative phases time, and to homogenize and termodynamically regulate the process.

7) The use is claimed of introducing, before or during the process some water as an expanding agent to the primary combustible, to favour the thermal exchange, to accelerate the times, and to improve the production quality of the plant.

8) he utilization is claimed of movable containers also for their uses in the commercial transportations.

9) It is evident that in the claims is included everything could appear from the general description of the invention.

TABLE 1/A

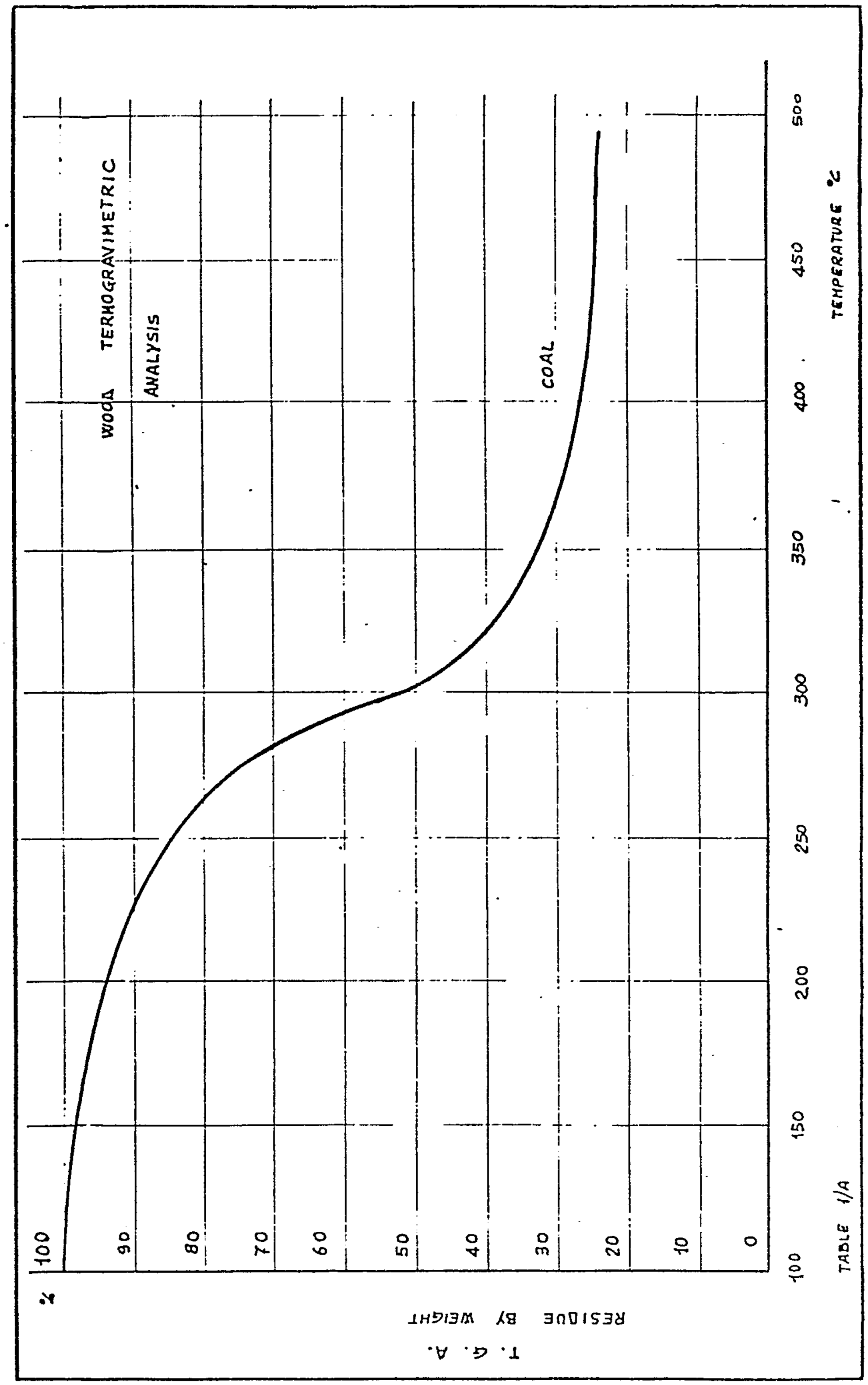
WOOD TERMOGRAVIMETRIC ANALYSIS
COAL
TEMPERATURE °C
100
150
200
250
300
350
400
450
500
%
100
90
80
70
60
50
40
30
20
10
0
RESIDUE BY WEIGHT
T. G. A.
TABLE 1/A

TABLE 1/B

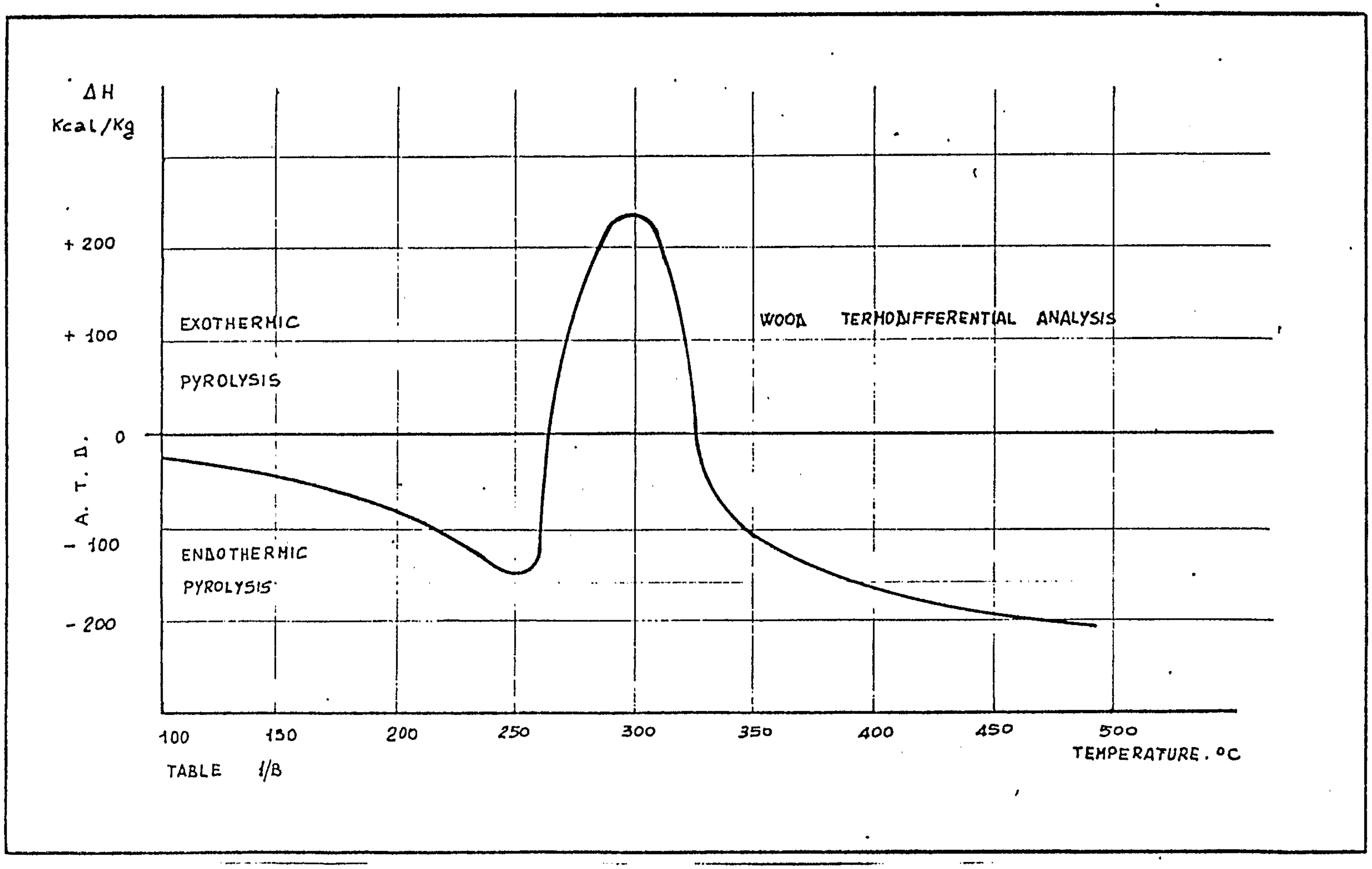

ΔH
Kcal/Kg
A. T. D.
+ 200
+ 100
0
- 100
- 200
EXOTHERMIC
PYROLYSIS
ENDOTHERMIC
PYROLYSIS
WOOD TERMODIFFERENTIAL ANALYSIS
100
150
200
250
300
350
400
450
500
TEMPERATURE. °C
TABLE 1/B

TABLE 1/C

WOOD PYROLYSIS BEAVIOR VERSUS TEMPERATURE AND PRODUCT EMISSION

| | | | | | | | | |
|---|---|---|---|---|---|---|---|---|
| REACTION | + | + | ++++ | +++++ | +++ | +++ | +++ | + |
| PRODUCTS | (WATER) | | ACETIC ACID<br>CARBON MONOXIDE = CO<br>CARBON DIOXIDE = $CO_2$ | ALCOHOLS<br>YDROCARBONS<br>TARS | HYDROGEN $H_2$ | | | |
| RESIDUAL COAL % | 90 | 80 | 60 | 35 | 30 | 28 | 25 | |

150 200 250 300 350 400 450 500

TEMPERATURE °C

TABLE 1/C

0069159

4/18

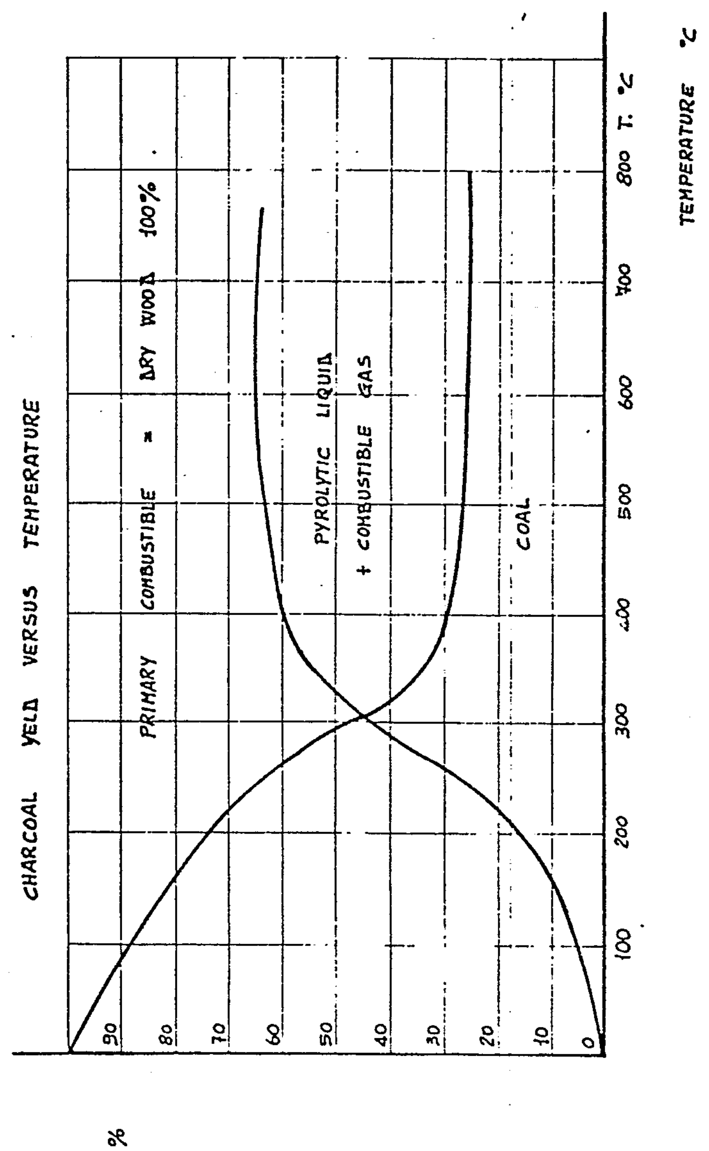


TABLE 2/A

TABLE 2/B

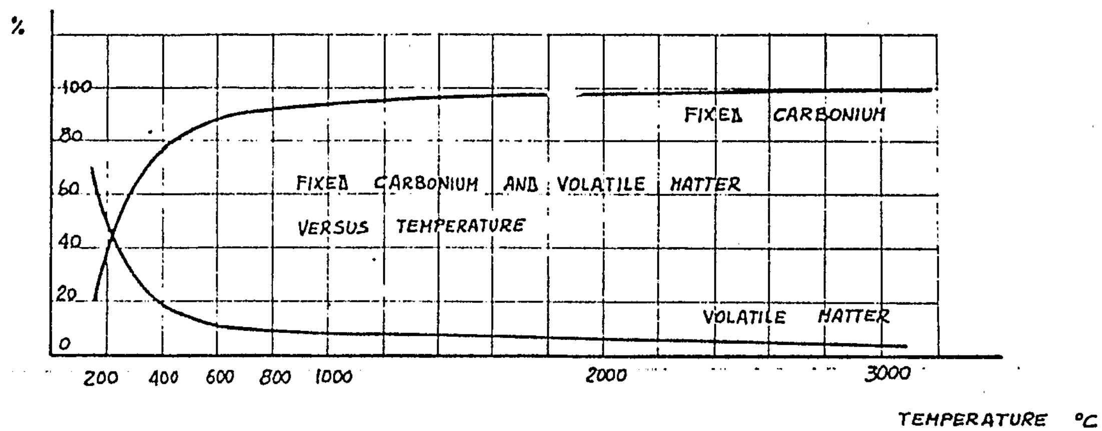
%
100
80
60
40
20
0
FIXED CARBONIUM
FIXED CARBONIUM AND VOLATILE MATTER
VERSUS TEMPERATURE
VOLATILE MATTER
200
400
600
800
1000
2000
3000
TEMPERATURE °C

TABLE 3/A

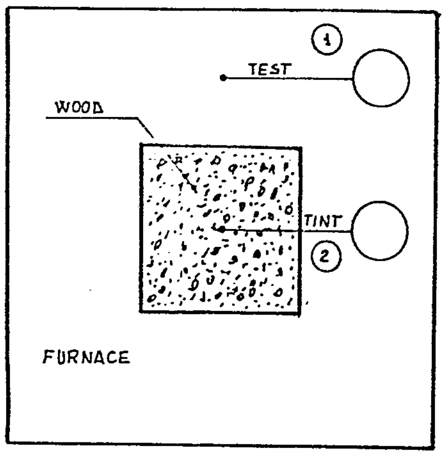


TABLE 3/B

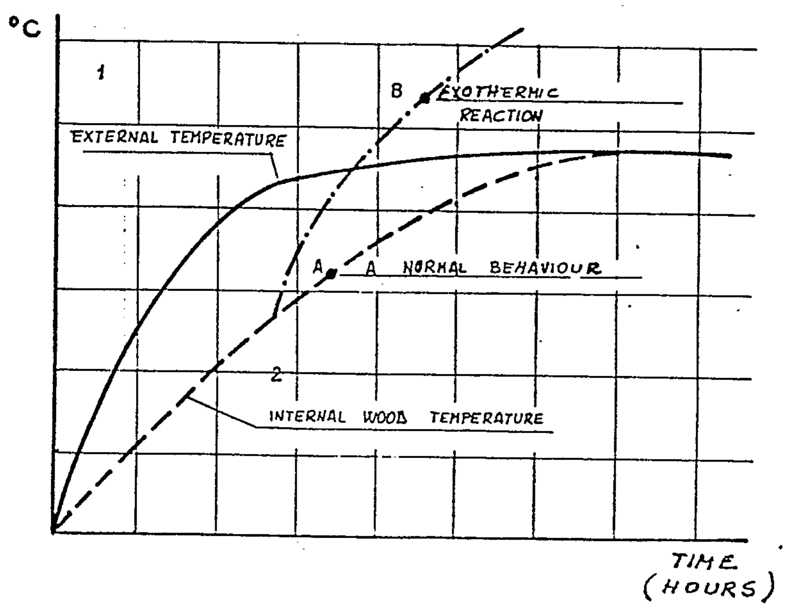

TABLE 3/C

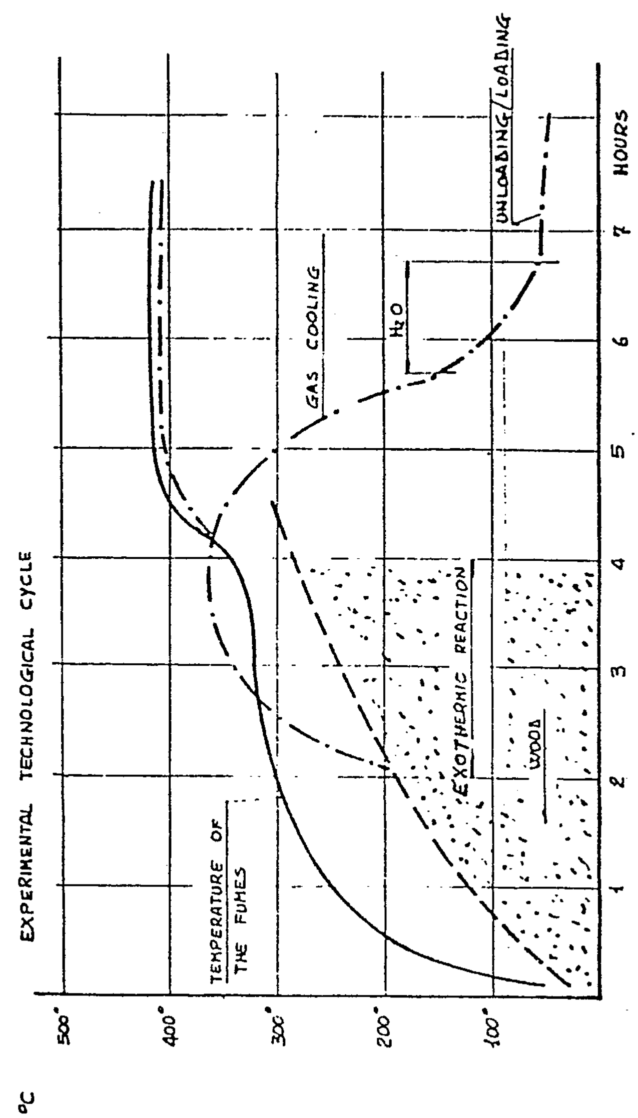
EXPERIMENTAL TECHNOLOGICAL CYCLE
°C
500°
400°
300°
200°
100°
1
2
3
4
5
6
7
HOURS
TEMPERATURE OF
THE FUMES
EXOTHERMIC REACTION
WOOD
GAS COOLING
$H_2O$
UNLOADING/LOADING

TABLE 3/D

EXPERIMENTAL LABORATORY PLANT

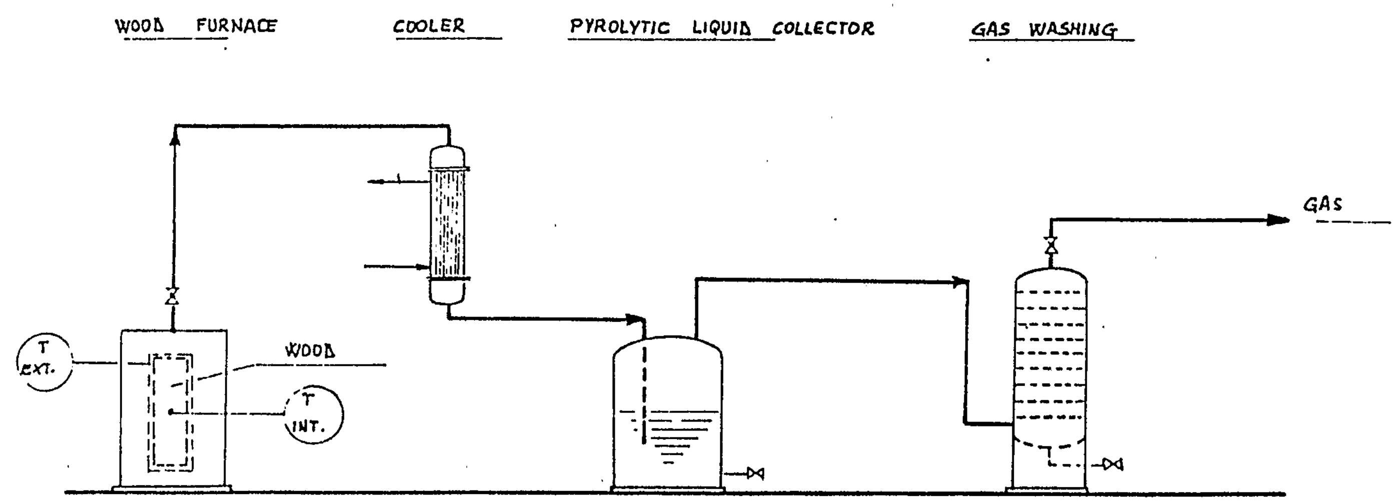

TABLE 4

WOOD PYROLYSIS ENERGY BALANCE

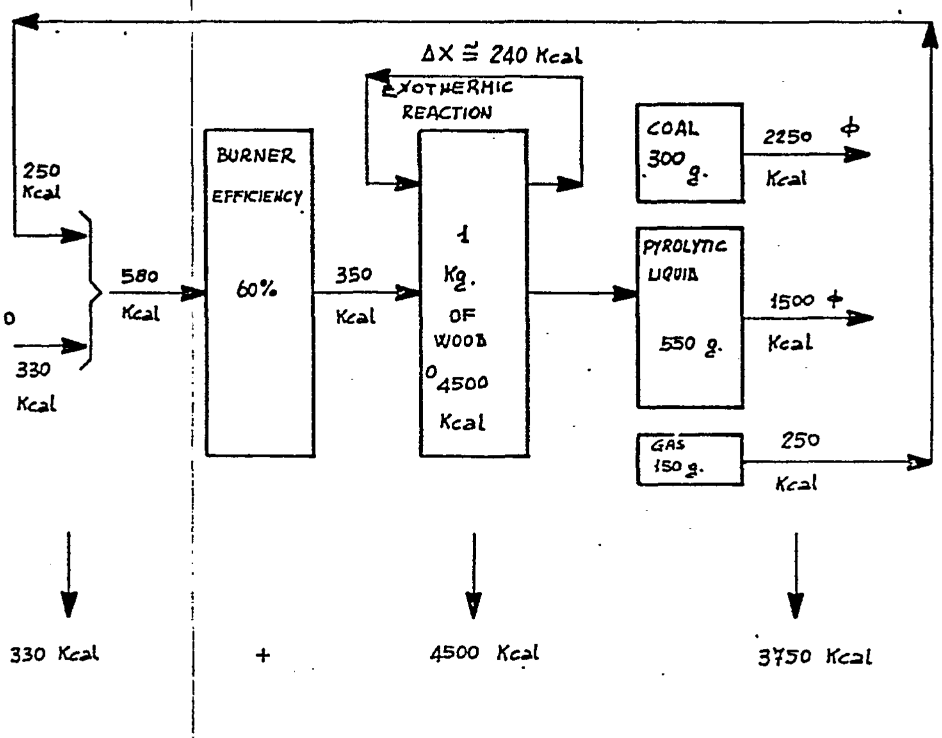


TOTAL EFFICIENCY 80%

PYROLYSIS FINAL EFFICIENCY

| | | | | |
|---|---|---|---|---|
| ϕ Kcal 4500 + | ϕ Kcal 2250 | | | |
| ϕ Kcal 330 + | ϕ Kcal 1500 | 3750 | | |
| | | | = | 77,64 |
| Kcal IN 4830 | Kcal OUT 3750 | 4830 | | |

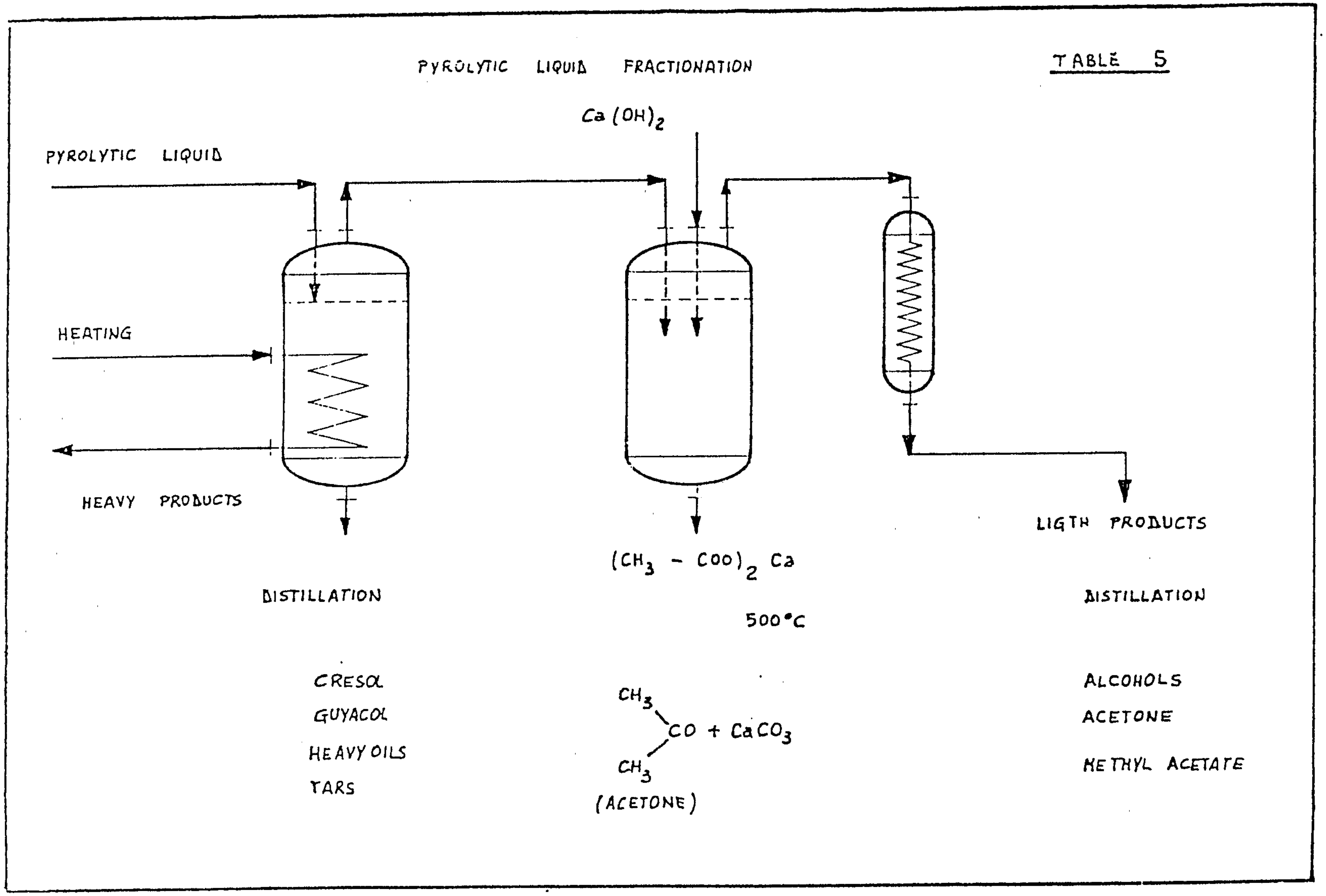
TABLE 5
PYROLYTIC LIQUID FRACTIONATION
$Ca(OH)_2$
PYROLYTIC LIQUID
HEATING
HEAVY PRODUCTS
DISTILLATION
CRESOL
GUYACOL
HEAVY OILS
TARS
$(CH_3 - COO)_2 Ca$
500°C
(ACETONE)
LIGTH PRODUCTS
DISTILLATION
ALCOHOLS
ACETONE
METHYL ACETATE

0069159

-- 11/18

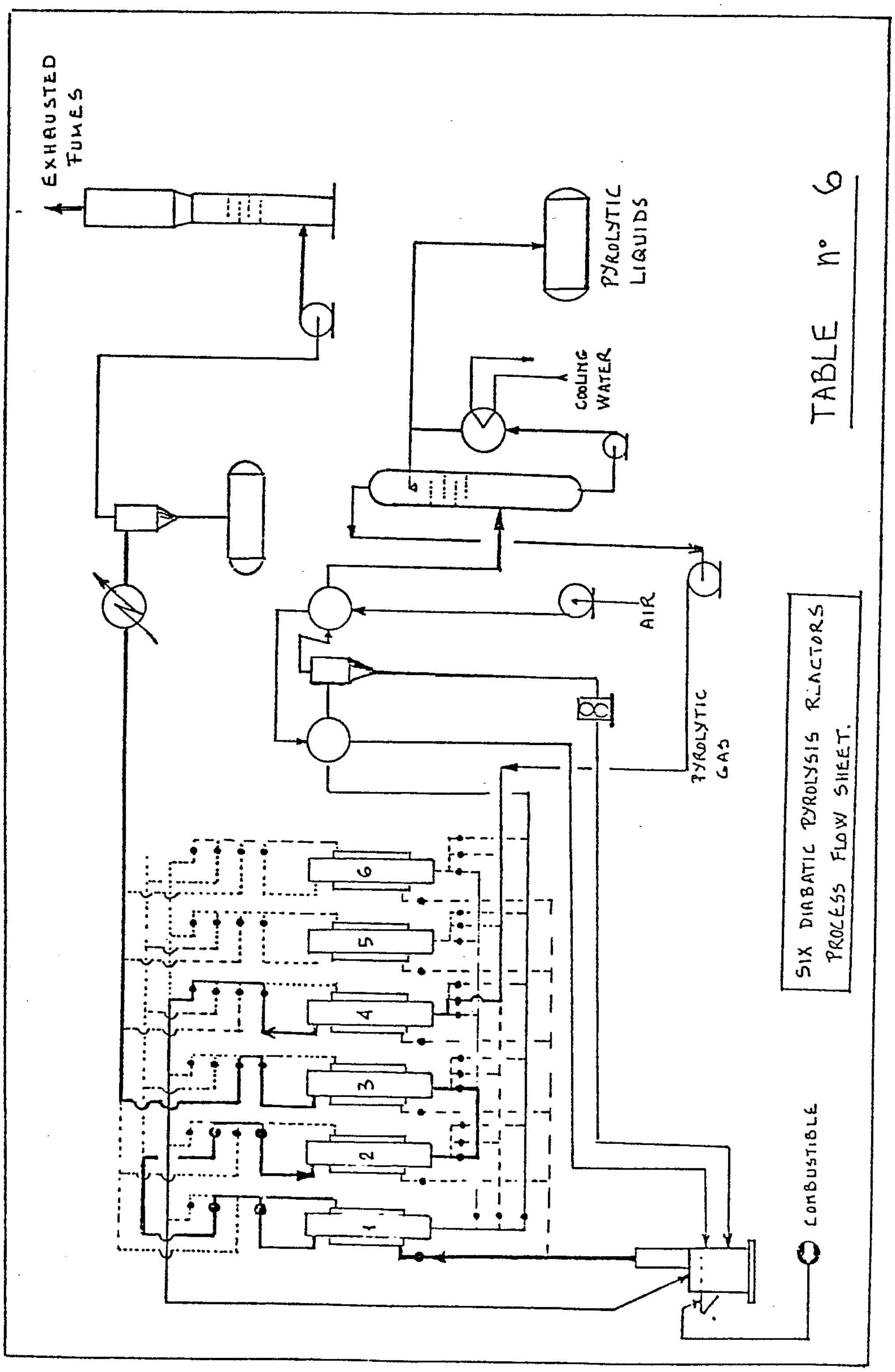

TABLE 7/A

| | | | | | | | | | |
|---|---|---|---|---|---|---|---|---|---|
| 3 | 4 | 5 | 6 | 1 | 2 | 3 | 4 | 5 | PREHEATING |
| 2 | 3 | 4 | 5 | 6 | 1 | 2 | 3 | 4 | DRYING |
| 1 | 2 | 3 | 4 | 5 | 6 | 1 | 2 | 3 | PYROLYSIS |
| 6 | 1 | 2 | 3 | 4 | 5 | 6 | 1 | 2 | PYROLYSIS |
| 5 | 6 | 1 | 2 | 3 | 4 | 5 | 6 | 1 | GAS COOLING |
| 5 | 6 | 1 | 2 | 3 | 4 | 5 | 6 | 1 | WATER COOLING |
| 4 | 5 | 6 | 1 | 2 | 3 | 4 | 5 | 6 | UNLOADING - LOADING |

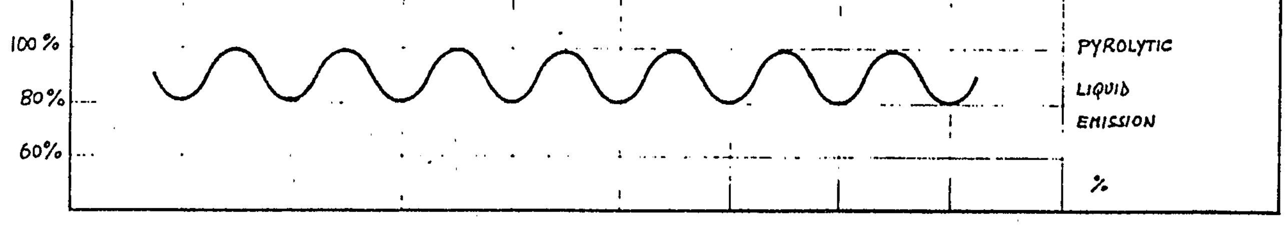


SIX PYROLYSIS REACTORS ALTERNATIVE BEHAVIOUR

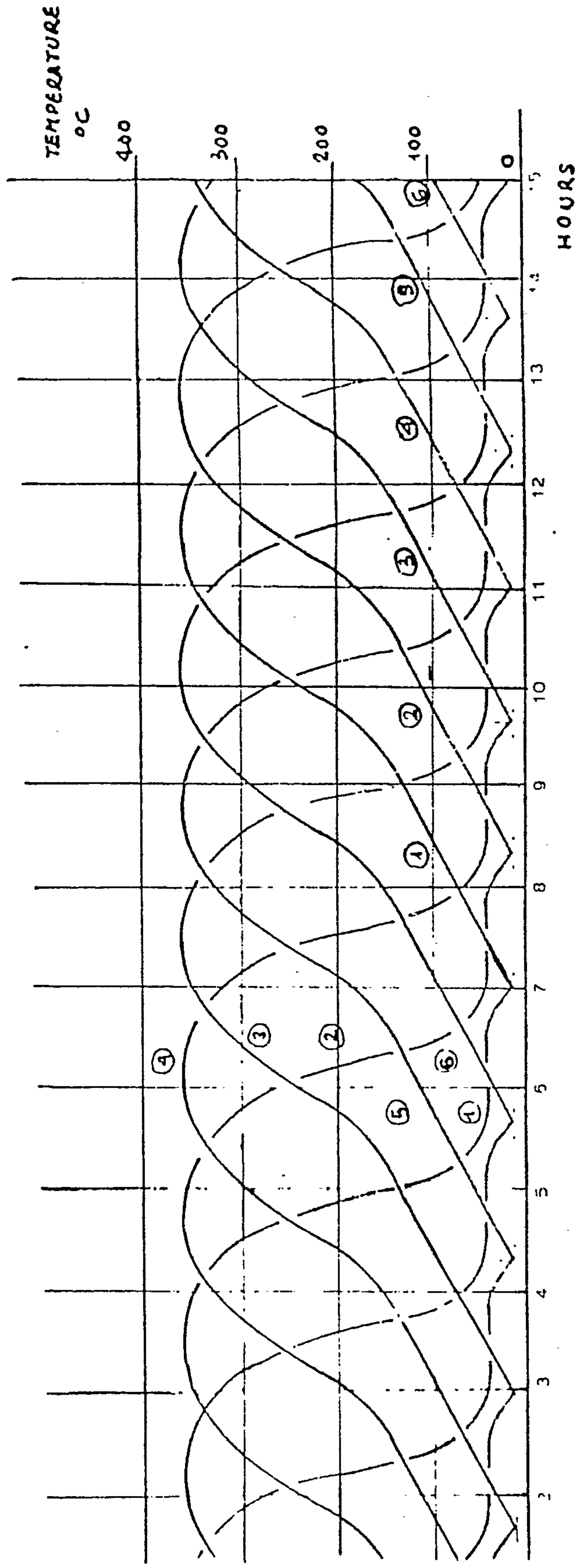


TABLE 7/B

SIX PYROLYSIS REACTORS OPERATIVE BEHAVIOUR

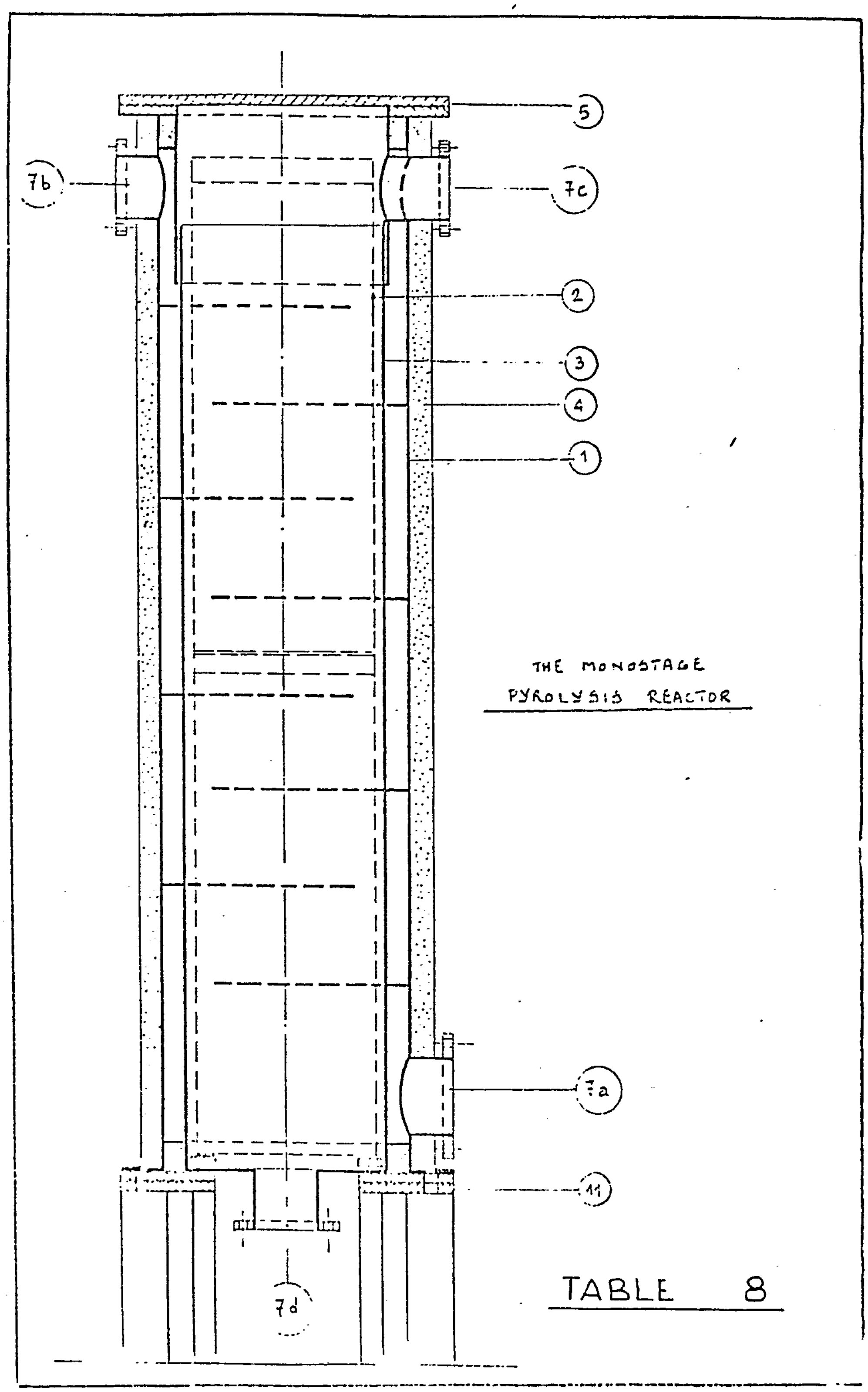


TABLE 8

DATA PROVA ESEMPIO N° 1 (10/3/80)

OPERATORE R. OSTAN

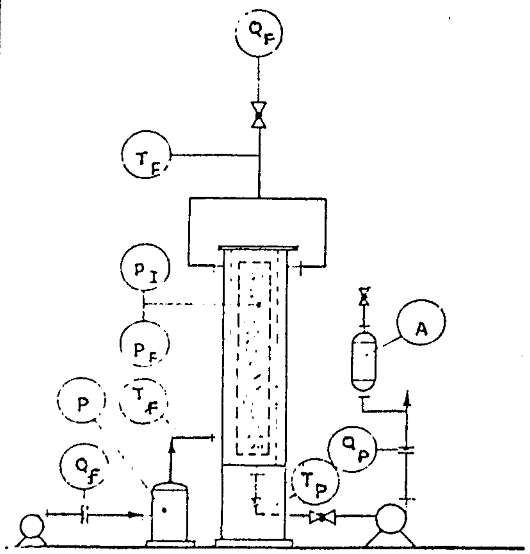


INDICAZIONI TEST PIROLISI
LEGNO Ø 10 cm. h 30 cm
umidità 12% $H_2O$

PYROLYSIS INDICATIONS

| TEMPO DI RILEVAM. | RILEVAMENTO DATI $T_Q$ | $T_P$ | $T_F$ | $Q_f$ | $Q_P$ | $Q_F$ | PRELIEVO ANALITICO (A) |
|---|---|---|---|---|---|---|---|
| ORE | °C | °C | °C | MC/h | MC/h | MC/h | |
| 0 | 100 | 70 | – | 1600 | 1600 | 0 | - |
| 1 | 165 | 120 | – | 1600 | 1600 | 0 | - |
| 2 | 400 | 250 | 370 | 2000 | 525 | 1500 | X1 |
| 3 | 550 | 300 | 470 | 2000 | 575 | 1500 | X2 |
| 4 | 650 | 320 | 510 | 2000 | 680 | 1500 | X3 |
| 5 | 500 | 320 | 410 | 2000 | 680 | 1500 | X4 |
| 6 | 300 | 310 | 305 | 1600 | 400 | 1300 | X5 |
| 7 | 250 | 260 | 270 | 1600 | 450 | 1200 | X6 |
| 8 | 200 | 230 | 215 | 1000 | 425 | 600 | X7 |
| 9 | 100 | 150 | - | 400 | 400 | - | X8 |
| 10 | 70 | 70 | - | 400 | 400 | - | - |
| | | | | | | | |
| | | | | | | | |

RILEVAMENTO : Pi (Kg) 1150
Pf (Kg) 370
Pc (Kg) ogni ora :~ 35 Kg./h

DATA REGISTRATION.

OSSERVAZIONI

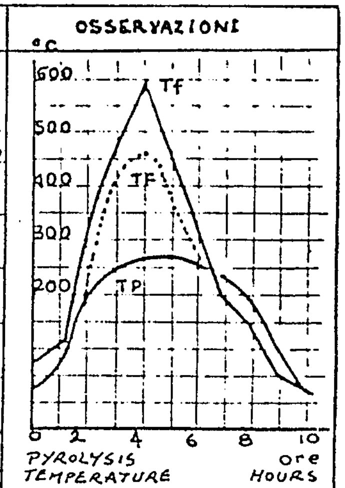


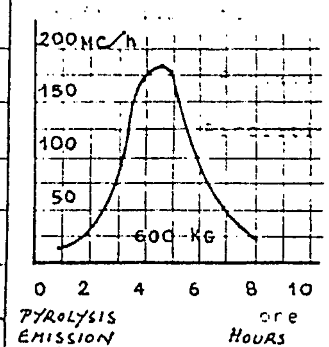


TABLE N° 9

0069159

16/18

DATA PROVA ESEMPIO N° 2 (15/3/80)
OPERATORE R. OSTAN

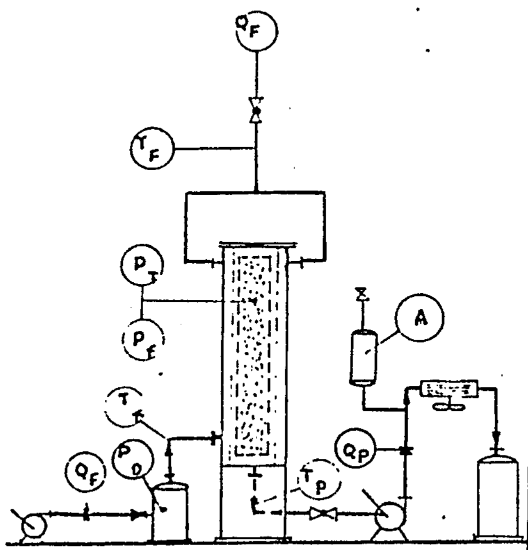


RILEVAMENTO DATI

| TEMPO DI RILEVAM. | $T_C$ | $T_P$ | $T_F$ | $Q_f$ | $Q_F$ | $Q_P$ | PRELIEVO ANALITICO |
|---|---|---|---|---|---|---|---|
| ORE | °C | °C | °C | MC/h | MC/h | MC/h | (A) |
| 0 | 108 | 72 | - | 1600 | 1600 | - | |
| 1 | 170 | 125 | - | 1600 | 1600 | - | |
| 2 | 390 | 245 | 365 | 2000 | 520 | 1500 | X1 |
| 3 | 540 | 290 | 460 | 2000 | 570 | 1500 | X2 |
| 4 | 650 | 330 | 510 | 2000 | 670 | 1500 | X3 |
| 5 | 500 | 325 | 420 | 2000 | 650 | 1500 | X4 |
| 6 | 320 | 310 | 305 | 1600 | 400 | 1300 | X5 |
| 7 | 250 | 250 | 265 | 1600 | 450 | 1200 | X6 |
| 8 | 190 | 230 | 210 | 1000 | 420 | 600 | X7 |
| 9 | 105 | 150 | - | 400 | 400 | - | X8 |
| 10 | 75 | 70 | - | 400 | 400 | - | |

OSSERVAZIONI

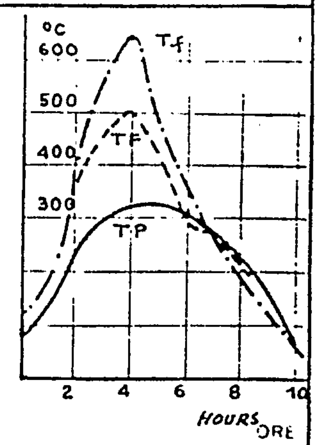


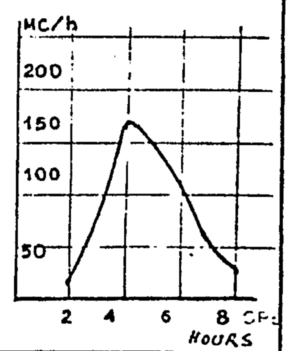


PYROLYSIS INDICATIONS

INDICAZIONI TEST PIROLISI
ROBINIA pezzi Ø ~ 7 cm h 30 cm ~
umidità 15%

RILEVAMENTO : Pi (KG) 1100
Pf (KG) 380
Pc (Kg) ogni ora ~ 25Kg/ h

DATA REGISTRATION

TABLE N° 10

SERIES PYROLYSIS

PIROLISI IN SERIE

SCHEMA INDICATIVO DELL'IMPIANTO
CON REATTORE MULTISTADIO

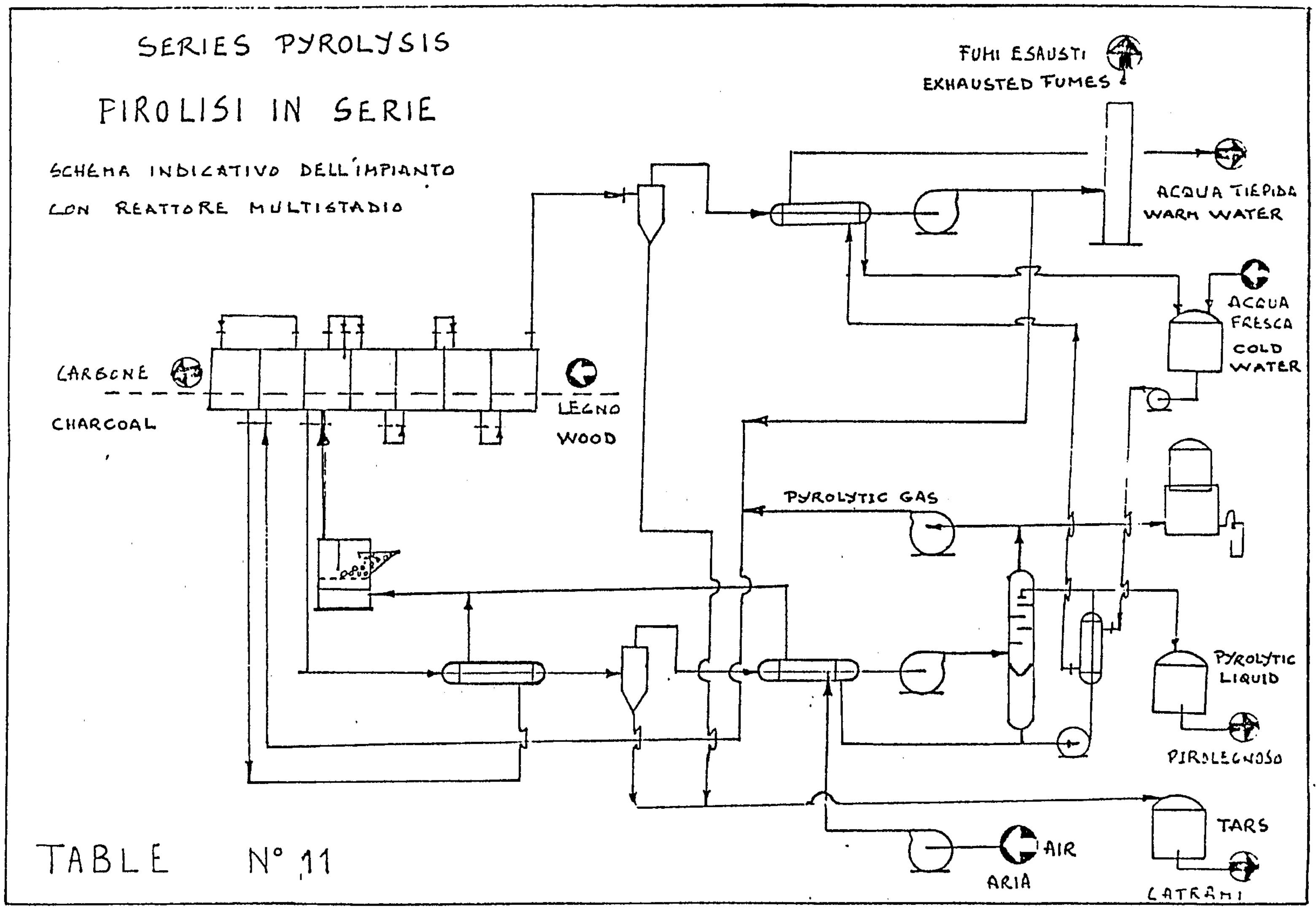


TABLE N° 11

REATTORE MULTISTADIO PER PIROLISI IN SERIE

MULTISTAGE REACTOR FOR THE SERIES PYROLYSIS

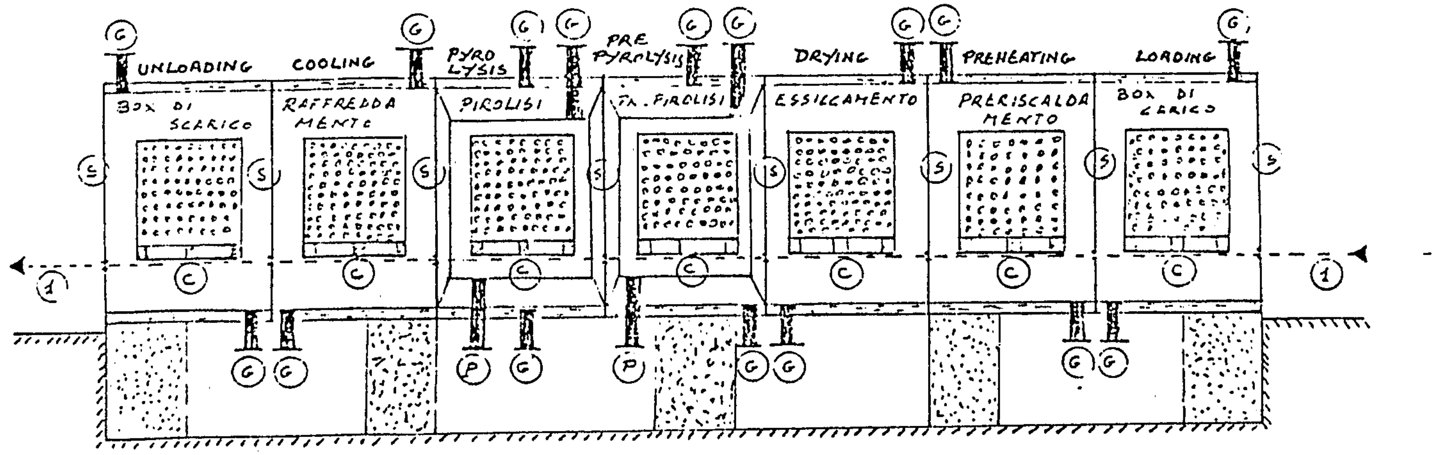


(1) VIA DI CORSA - PALLET RUNNIG WAY

(C) CARTUCCIA PALLET - CARTIDGE

(G) BOCCHELLO PASSAGGIO FUMI - FUMES LINE

(P) BOCCHELLO PASSAGGIO PIROLEGNOSO - PYROLYTIC PRODUCTS LINE

(S) PORTE SCORREVOLI A TEMPO - SLIDE DOORS

TABLE N° 12

0069159

European Patent Office

# EUROPEAN SEARCH REPORT

Application number

EP 81 10 5177

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | CH-A- 237 758 (AKTIENGESELLSCHAFT FUR CHEMISCHE HOLZVERWERTUNG) *Pages 1-6; figures 1-6* --- | 1,2,4, 6,8,9 | C 10 B 53/00<br>C 10 B 1/04 |
| Y | FR-A- 885 080 (ETAT FRANCAIS) *Abstract; figures 1-3* --- | 1,2,4, 6,8,9 | |
| Y | FR-A- 685 500 (TURPIN) *Abstracts 1,2; figures 1-4* --- | 3,5 | |
| Y | FR-A- 971 510 (DURIEUX) *Abstract; figures 1-6* --- | 3,5 | |
| A | FR-A- 885 665 (SZEK) *Abstract* --- | 1,2,4 | TECHNICAL FIELDS SEARCHED (Int. Cl. ³) |
| A | FR-A-2 277 137 (KIENER) *Claim 14; figure 3* ----- | 7 | C 10 B |

The present search report has been drawn up for all claims

| Place of search | Date of completion of the search | Examiner |
|---|---|---|
| THE HAGUE | 25-05-1982 | MEERTENS J. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document